**Europäisches Patentamt**

**European Patent Office**

**Office européen des brevets**

(19)

(11) **EP 1 562 148 A1**

(12) **EUROPEAN PATENT APPLICATION**

(43) Date of publication:
**10.08.2005 Bulletin 2005/32**

(51) Int Cl.$^7$: **G06T 9/00**

(21) Application number: **04100447.4**

(22) Date of filing: **06.02.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Koninklijke Philips Electronics N.V.**
**5621 BA Eindhoven (NL)**

(72) Inventor: **The designation of the inventor has not yet been filed**

(74) Representative: **de Jong, Durk Jan et al**
**Philips**
**Intellectual Property & Standards**
**P.O. Box 220**
**5600 AE Eindhoven (NL)**

(54) **Method and apparatus for encoding and decoding an image**

(57)    A digital image coding apparatus, generates a representation of spatially filtered images that are obtainable from a common source image by application of spatial filter operations with respective filter bandwidths. The dependence of image information in the filtered images on position in the filtered image and filter bandwidth is represented by information that defines a surface in a space that has at least the position in the filtered image and the filter bandwidth as coordinates. The shape and position of the surface at least partly defines said dependence. The apparatus receives an image signal that represents the source image as a function of position in the image. The apparatus then selects coordinate values of a set of control points. Selection includes selecting filter bandwidth components of the coordinate values, dependent on the image signal. The selection optimizes a quality of approximation by an approximate version of the surface of a true version of the surface that follows from the source image.

FIG. 4

EP 1 562 148 A1

## Description

The invention relates to image processing and in particular to digital image representation.

Digital image representation techniques represent an image in terms of a finite set of coefficients. A simple representation technique uses sample values of image intensity and/or color taken from quantized pixel locations. Examples of more complicated digital image representation techniques are compression techniques that reduce the amount of coefficient data that is used to represent the image, while minimizing the resulting visible artefacts. The MPEG and JPEG standards provide examples of such digital image representation techniques.

Conventional digital image representations are designed for specific display purposes. Display typically requires pixel values for discrete pixel locations $r_i$ (the subscript "i" is used herein to indicate the existence of different elements of any discrete set of elements), representing samples of an anti-alias filtered version $I_w(r)$ of an "ideal" image intensity and/or color $I(r)$ as a function of location r:

$$I_w(r)= \int dr' \ H_w(r') \ I(r-r')$$

$$Sample(r_i) = I_w(r_i)$$

Herein $H_w(r')$ is an anti-alias filter kernel (typically a low-pass filter kernel), with a filter bandwidth "w". Conventional digital image representation techniques are only suitable for relatively inflexible display purposes, wherein the grid of sampling locations $r_i$ is known in advance. By sampling and/or compression information is discarded that it is assumed to be not significantly visible when the represented images will be displayed in this predetermined way. As a result, these representation techniques may not give satisfactory results if the image has to be displayed other than in this predetermined way.

In particular these digital image representation techniques may lead to unsatisfactory image display if there is a need to transform the image before display, for example by rotation, translation or scaling. As an example of the problems that can arise, an application may be considered wherein a user should be able to act as his or her own camera person to determine the way the image information is viewed. In this case the user should be able make changes to the virtual camera position and orientation, to zoom in or out etc. To generate the corresponding images from a digital image representation it is necessary to apply various transformations to the images represented by the compressed image data. That is, it is necessary to determine pixel values that correspond to a transformed version $I_T(r)$ of the ideal image I(r) image:

$$I_T(r)=I(T(r))$$

where T(r) is the image location to which an arbitrary transformation T maps the location "r". For display purposes typically samples of this transformed image are needed:

$$Sample(r_i)=\int dr' \ H_w(r') \ I(T(r_i)-r')$$

The required anti-alias filter bandwidth (of the filter function $H_w(r')$) depends on the distance between the pixel locations $T(r_i)$ on the transformed grid of sampling locations and may be different from the anti-alias filter bandwidth needed for the original image I(r), in particular if the transformation T(r) involves scaling, which changes the distance between the sampling points. In some embodiments, the bandwidth w may even be selected as a function $w(r_i)$ of pixel location $r_i$, for example to achieve locally increased blurring, or in the case of non-lineraly warped pixel grids. In this type of embodiment, transformations involve transforming the bandwidths as well, with a factor according to the scale factor of the transformation.

Most image digital image representation techniques and in particular compression techniques are not well suited for the purpose of realizing the display of a transformed image, because the image is represented using a set of coefficients C that gives an approximation I(r|C) of the "ideal" image function I(r), based on assumptions about low visibility of approximation errors when the approximated image is displayed at a predetermined pixel grid.

For example, one way of realizing the desired transformed image is to determine a set of sample values {I(r|C)} of a decompressed image and subsequently to compute a set of pixel values T{I(r|C)} for the transformed image from the samples {I(r|C)} of the decompressed image. However, this typically leads to artefacts (visible differences between the ideal transformed image $I_T(r)$ and the computed T {I(r|C)}), for example because the sampling grid that is assumed during the approximation of the image I(r) by the set of coefficients C does not match the grid that is used during display of the transformed image. Also, computation of the transformed image requires considerable processing capacity, which makes this technique awkward for real-time consumer applications.

In the case of video signals (moving images corresponding to an ideal function I(r,t)), the same problems occur for temporal transformations (varying replay speed) or combined temporal and spatial transformations (e.g. time dependent rotation of the camera orientation), since the images are usually time sampled at predetermined temporal sampling frequency.

It is an object of the invention to provide a digital image representation that makes it possible to produce transformed images or image sequences while generating a minimum of visible artefacts, without requiring an excessive amount of data to represent the image and/or an excessive amount of computations to perform the transformations.

An alternative to pixel based digital image representation uses coordinate based coefficients C to represent an image instead, e.g. by using coefficients C in terms of parameters that describe curves that form the edges between image regions with different image properties. When a rotated or translated image is needed this image can be obtained by obtaining a transformed set of coefficients T(C), followed by decompression (determination of the function values $I(r|T(C))$ as needed for display) using the transformed coordinate based coefficients T(C). In this way, the artefacts involved with transforming image samples $I(r_i)$ from a quantized grid of locations $r_i$ may be avoided, since the coordinates bases coefficients C can be transformed with much less quantization error.

In this representation the implementation of image transformations substantially preserves the composition properties of the transformations. If the application of two successive transformations $T_1$, $T_2$ corresponds to a composite transformation $T_3$ (e.g. if $T_1$, $T_2$ are rotations over angles $\varphi_1$, $\varphi_2$ and $T_3$ is a rotation over angle $\varphi_1 + \varphi_2$) then, except for small rounding errors

$$T_3(C) \text{-} T_1(T_2(C))$$

This should be contrasted with the approach where the transformed image is approximated by computing pixel values $T\{I(r|C)\}$ for the transformed image from a set of pixel values $\{I(r|C)\}$ of the decompressed image. In this case a single computation of pixel values with a transformation $T_3$ in general leads to significantly different results compared to computation of pixel values with a transformation $T_1$ applied to pixel values obtained by first applying a transformation $T_2$. In addition, by transforming the coefficients C, one avoids the extensive computations needed to transform the decompressed image $I(r|C)$.

Another alternative is the use of a scale-space representation. In this case a series of filtered versions of an image is used filtered with progressively lower spatial bandwidth "w". The intensity and/or color of each version corresponds to a function $I_w(r)$, where w is the relevant filtering bandwidth. Conventional digital pixel samples $C(w_i)$ are obtained for versions $I_{wi}(r)$ at a discrete number of bandwidths $w_i$, sampled at a grid of locations $r_i$ with a sampling resolution that corresponds to the filter scale. Typically the coefficients $C(w_i)$ are obtained of difference images

$$I_{wi}(r) \text{-} I(r|C(w_{i-1}))$$

after subtracting the decompression result $I(r|C(w_{i-1}))$ for the filtered version $I_{w(i-1)}(r)$ obtained for the next narrower spatial bandwidth.

With this technique decompression involves reconstruction of the different versions of the image $I_{wi}(r)$, starting from the narrowest bandwidth filtered version up until a widest bandwidth filtered version. Lower resolution decompression can be realized by ignoring a number of wider bandwidth filtered versions.

With this form of representation the changes of anti-alias filtering bandwidth involved with changes in the distance between pixel locations can be addressed during decompression, without requiring filtering of decompressed images, provided that it suffices to work with rounded bandwidth values $w_i$ that correspond to the different low pass filtered versions. For this type of transformation artefacts are avoided and the transformation does not involve a large amount of computations for filtering.

However, neither curve based digital image representations, nor scale-space representation techniques prevent artefacts in transformed images when arbitrary transformations have to be performed. For example, the selection of curves that are used to represent edges usually assumes a certain scale of display. Because the source images from which the compressed data is derived is captured with pixel based sensors, a maximum resolution curve of this type would follow pixel boundaries, with the result that transformations result in the same problems would occur as for grid based representation. To avoid artefacts, a lower resolution fit to the edge is normally made during compression, at a resolution selected according to the intended scale of display. When another scale of display has to be realized, computations are needed to adapt the curve and artefacts may occur. In addition adaptation of the edge may cause artefacts in the display of image segments bounded by the edges. The application of rotations to scale space compressed images may lead to the same sorts of artefacts as for images that are compressed at a single scale.

An improvement of this situation could be realized by combining scale space based representation and coordinate based representation, for example by representing filtered image versions of successively lower spatial bandwidth $w_i$ each in terms of a respective set of coordinate based coefficients $C(w_i)$ of edges in the relevant filtered image version. However, this requires a substantial amount of data in order to cover all possible bandwidths $w_i$, so much that one can hardly speak of compression any more. In addition, if the different bandwidths $w_i$ are not closely spaced, this technique still requires computations to avoid artefacts if a filtering bandwidth is required at a bandwidth w that does not coincide with the bandwidth $w_i$ of one of the filtered image versions.

Among others it is an object of the invention to provide for an efficient type of image that makes it possible to obtain images corresponding to arbitrary filter scales with a minimum of artefacts.

Among others it is an object of the invention to make it possible to generate transformed versions of an image efficiently and with a minimum of artefacts.

Among others it is an object of the invention to make it possible to apply transformations such as rotations, scaling and/or translation to an image representation without loss of information, before converting the transformed representation to an array of pixel data and without causing excessive visible artefacts.

Among others, it is an object of the invention to provide for a form of image representation that lends itself to perform image transformations without first converting the image to an array of pixel data and without causing excessive artefacts.

Among others it is an object of the invention to provide for a method and apparatus for converting input images into data that represents the image in a way that lends itself to perform image transformations without first converting the image to an array of pixel data and without causing excessive artefacts.

Among others it is an object of the invention to provide a method and apparatus for displaying images derived from an image representation in which the image is represented in a way that lends itself to perform image transformations without first converting the image to an array of pixel data and without causing excessive artefacts.

An apparatus according to the invention is set forth in Claim 1. The invention makes use of a representation of filtered images $I_w(r)$ as a function $I(r,w)$ of r and w that are obtainable (but need not necessarily be obtained to form the representation) from a common source image by application of filter operations with respective filter bandwidths. The representation makes uses of descriptions of surfaces S in a multi-dimensional space, which will be called $\Omega$, that has at least position "r" in the image and a filter bandwidth "w" as coordinates. If the dimension of the space $\Omega$ is n, then the surface S is a mapping from $R^n$ to R for the luminance aspect of the source image. S is a mapping from $R^n$ to $R^3$ for color images, etcetera. The surfaces S represent an aspect of the dependence of image information (i.e. intensity and/or color values) on position r and bandwidth w. In the image representation the shape and position of the surfaces S are represented by information that specifies coordinates of a discrete set of control points. The position of the control points, including their filter bandwidth coordinate component is selected dependent on the content of the source image, so as to optimize a quality of approximation of the surfaces S.

The optimal positions of at least one type of control point are defined for example by roots of a predetermined equation of the coordinates of the control point, wherein the parameters of the equations depend on the content of the filtered images and the way they depend on the filter bandwidth. Such an equation may express for example whether the filter bandwidth value is locally extreme on a surface S. Since the filtered images can be determined from a common source image, the parameters of such an equation can be expressed in terms of the content of the source image. This makes it possible to search for this type of control point without computing complete filtered images, or indeed without first even determining the location of the surfaces. Local evaluations for an iterative series of point in space that converges to the required control point may be used in one embodiment.

For example a surface S may represent how a boundary of locations r, between regions that have mutually different image properties in a filtered image $I_w(r)$, changes as a function of filter bandwidth w. In this case, in addition to describing the surfaces S, the representation preferably also contains property information that specifies the properties that may be used to fill in the filtered images $I_w(r)$ for locations r inside the regions. This property information is preferably specified in common for a range of filter bandwidth values "w" that is contained within a surface S, not individually for each filter bandwidth value. An example of a property that may be used to distinguish regions is a sign of curvature of the image information (e.g. intensity) of a filtered image $I_w(r)$ as a function of location r in the image. As is known, curvature as a function of a two-dimensional position may be expressed by a matrix of second order derivates with respected to position (called the Hessian matrix). Regions of directly or indirectly adjacent locations may be selected for example wherein both eigenvalues of his matrix have the same sign. In this case, an average size of the second order derivatives may be specified in the representation for points in a part of the space that is contained inside the surface, in common for filtered images with different filter bandwidths.

As another example, the surface S may be a surface in a higher dimensional space that has a image information values (e.g. an intensity) as coordinates. In this case, when a point on the surface S has a position value, a filter bandwidth value and an image information value as coordinates, this means that the filtered image obtained by filtering with a filter with the filter bandwidth value of the point has the image information value of the point as image information at the position in the filtered image that equals the position value of the point

According to the invention, the shape and position of the surfaces S is represented by a finite set of control points $C_i$ in the space that has at least the position in the image and the filter bandwidth as coordinates. The control points $C_i$ control the position and shape of a surface S in that space. The control points $C_i$ may for example be branch points of a skeleton of the surface S (in which case the representation preferably also contains information that specifies the distance from the skeleton to the nearest points on the surface S as a function of position along the skeleton). In another example the control points $C_i$ may be points on the surface S, or substantially at the surface S, between which the surface S is described by what is substantially an interpolation. It should be understood that the control points may be represented in the representation in any convenient way, for example using individual sets of coordinates for each control points, or by representing some control points by offset coordinates to other control points or to a reference point, or more complicated invertible functions of combinations of control points.

Further according to the invention, the position of the control points $C_i$, including the filter bandwidth component of the coordinates thereof is selected dependent on the source image, the selection is made so as to optimize the way in which the represented surface S approximates a "true" surface that follows from the common source image from which the filtered images are obtainable. "Optimization" as used herein is intended to be a broad term. Optimization can take various forms. For example, the position of the control points $C_i$ may be said to be optimized if the true version of the surfaces S can be approximated within a required accuracy with a minimum number of control points $C_i$, or so that with a predetermined number of control points $C_i$ a minimum approximation error is realized. In another embodiment the optimal approximation is realized by selecting control points $C_i$ substantially at topologically characteristic points, such as at branch points of a skeleton of the surface S, points of maximum curvature on the surface S etc. In yet another embodiment at least some control points $C_i$ are said to be optimized if to the next nearest control points $C_i'$ for interpolation of a geometric shape such as the surface S itself or its skeleton can be placed at a maximum possible distance from the selected control points, without sacrificing more than an allowable amount of accuracy of the interpolation.

As the positions of the control points $C_i$ are selected dependent on the content of the source image the position of the control points, including the filter bandwidth component of the coordinates of the control points $C_i$ typically is different for different images. Typically, the coordinates of different control points $C_i$ for the same source image also have different filter bandwidth components. There are typically no two different points $C_i$ with the same common filter bandwidth coordinate. Rather, each control point $C_i$ has its own independent filter bandwidth value, selected so as to optimize representation of the surface.

Accordingly, the decoding of this type of image representation, which is used to generate image information values for pixels, may use combinations of control points $C_i$ with mutually different filter bandwidth coordinates to generate the image information for a given pixel location. Typically, decoding is performed for a specified filter bandwidth value w for the entire decoded image and a sampling grid of pixel locations $r_i$ in the decoded image. However, it is possible to decode part of an image with a higher value of w, for instance to apply local blurring (for instance to blur the face of an individual for privacy reasons, or to make brand logo's unrecognisable for copyright reasons. The converse is also possible, for instance to draw the attention to a specific portion in an image, this portion may be decoded at a lower value for w in order to make it stand out sharper. In general, the reconstruction bandwidth w will be a function both or r and, for image sequences, t: w=w(r,t) Next the image information is computed for a set of corresponding points $p_i$ in the location-bandwidth space, each point $p_i$ having one of the pixel locations $r_i$ as position coordinates and the bandwidth value w as bandwidth coordinate. To decode the image the relative positions of all these points $p_i$ with respect to the surfaces that are described by the image representation are relevant. The image information for a point $p_i$ for a given pixel location $r_i$ will typically be influenced by control points $C_i$ of the surface, with mutually different filter bandwidth coordinate components that differ from the filter bandwidth w for which the image is decoded. Different weights may be given to these control points $C_i$ with different bandwidth component in order to compute the image information for different pixel locations $p_i$. or combinations of control points may be selected between which a surfaces S may be interpolated to a pixel location $p_i$ for a given bandwidth w.

In an embodiment, prior to decoding an image, transformations may be specified, such as a rotation, scaling or translation or a combination thereof. The transformations may be specified for example dependent on a user selection of a view point. The transformations are preferably performed prior to decoding, by changing the locations of the points $p_i$ that correspond to the pixel locations $r_i$ relative to the control points $C_i$. That is, transformed points $T(p_i)$ or inversely transformed control points $T^{-1}(C_i)$ may be computed, before decoding (also part of the transformation may be applied to the points $p_i$ and the remaining part inversely to the control points $C_i$). If the transformation involves scaling by a factor "f", the filter bandwidth component of the coordinates of the points $p_i$ is also transformed by this factor, or the filter bandwidth component of the coordinates of the control points $C_i$ is transformed with an inverse factor.

The advantage of this is method of transforming is that substantially no accuracy is lost during transformation. Each point or control point is transformed individually into a point or control point with different coordinate values, with no loss of information other than possible rounding errors.

The method and apparatus may also be generalized to time dependent images, or series of images that correspond to successive time points. In this case a space is used that has an additional a time coordinate component, in addition to the position and filter bandwidth coordinate components. Surfaces in this higher dimensional space may be used to represent the dependence on position in the image, filter bandwidth and time. According to an embodiment of the invention these surfaces are encoded in a digital image representation using selected control points, with a position of which also the time coordinate component is selected dependent on the source image. Techniques comparable to those for time independent images may be used to select the positions of the control points, to decode and/or to transform the images. Thus, for example a time series of rotated images can be obtained simply by rotating a finite set of control points

In a further embodiment a space is used which has a further temporal filter bandwidth coordinate component in addition. Thus, images for arbitrary time and temporal filter bandwidth may be defined. Different temporal filter bandwidths may be selected for display purposes, for example to realize different replay speeds. Surfaces in this higher dimensional space may be used to represent the dependence on position in the image, filter bandwidth, time and temporal filter bandwidth. According to an embodiment of the invention these surfaces are encoded in a digital image representation using selected control points with a position of which also the temporal filter bandwidth coordinate component is selected dependent on the source image.

These and other objects and advantageous aspects of the invention will be described by means of a number of exemplary embodiments, using the following figures.

Figure 1    shows an image display apparatus
Figure 2a   shows an xs cross-section of surfaces in x,y,s space
Figure 2b   shows an xy cross section of surfaces in x,y,s space
Figure 2c   shows another xy cross section of surfaces in x,y,s space
Figure 3    shows a skeleton of a surface and branch points in the skeleton
Figure 4    shows an image encoding apparatus.

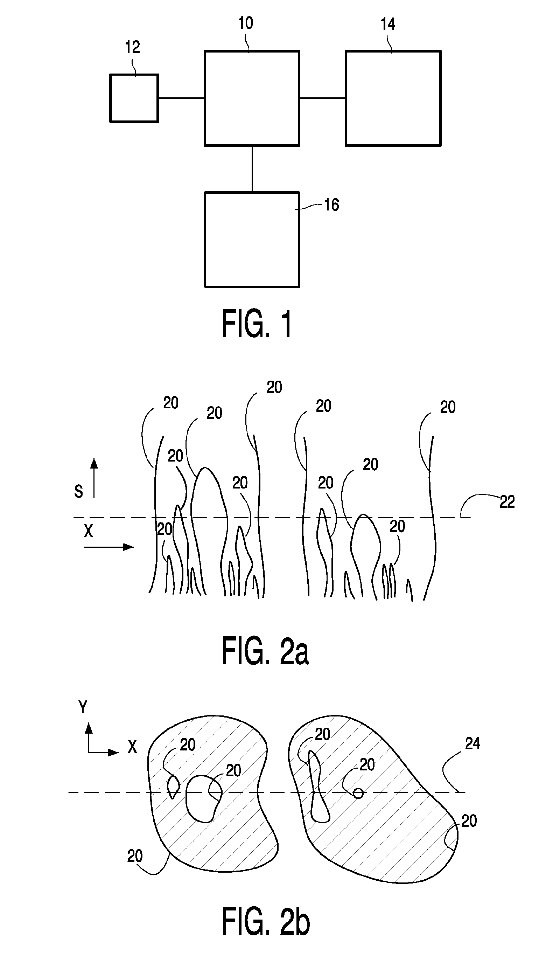

Figure 1 shows an image display apparatus, comprising a processor 10, and an image memory 12, a display unit 14 and an interactive control device 16 coupled to processor 10.

In operation image memory 12 stores a digital representations of images. A user controls interactive control device 16 to select how the images will be viewed, e.g. by selecting a virtual camera position and orientation and a zoom factor. Processor 10 receives information about the selection made by the user. From this selection processor 10 computes how the images should be transformed to generate a viewable images by display unit 14, transforms the images accordingly and controls display unit 14 to display the transformed images.

In image memory 12 for each a set of coefficients is stored that serves as a digital representation of the image. Alternatively, a set of coefficients may be stored that serves as a digital representation of a temporally changing image. Various representations will be described.

In a first class of digital representation each image is represented by sets of control parameters that describe surfaces in a space with coordinates (x,y,s) that contain image positions "r"=(x,y) and a filter scale "s". The filter scale is a measure of the size of details that will still be visible if a high resolution image is filtered with a spatial low pass filter that has spatial bandwidth w=1/s.

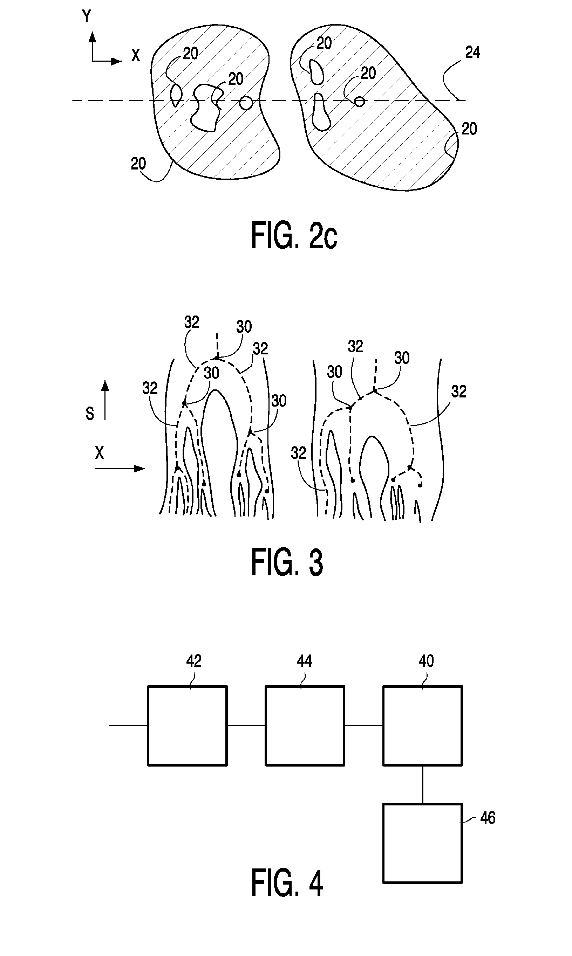

Figure 2a shows a schematic example of a cross-section through such surfaces 20 in an xs plane (with constant y value) in this space. The lines 20 that are shown show the xs values of points on the surfaces that have the constant y value. A line 22 shows a slice through the surfaces at a selected filter scale s. Figure 2b shows a cross-section through the space at this selected filter scale "s". This cross-section corresponds to a filtered image obtained by filtering at this filter scale, or part of such an image. The contours in the figure show the xy values of points on the surfaces that have the selected s value. Regions within the contours are shown by shading. A line 24 corresponds to the constant y value that was used in figure 2a. Figure 2c shows a cross-section like that of figure 2b, but at for a slightly smaller s value, to illustrate that regions can split up or change shape as a function s and that new regions can arise.

Typically the contours of the surfaces in the xy plane of figure 2a represent boundaries of regions in the filtered image, where the boundaries have been selected so that internally each region (indicated by shading) has homogeneous image properties. An example of such a property is the sign of curvature of the intensity of the filtered image as a function of position. As is known, curvature as a function $I(x,y)$ of a two-dimensional position x,y may be expressed by a matrix of second order derivates with respected to position (called the Hessian matrix). Regions may be selected for example wherein both eigenvalues of his matrix have the same sign, both positive or both negative.

The digital image representation according to the invention describes that position and shape of such surfaces S by means of a limited number of geometrical coefficients, that is, effectively the coordinates of control points in (x,y,s) space. "Control point" as used herein is a generic term, which refers to any type of relation between the position of the control points and the shape and position of the surfaces, for example points between the surface is a interpolation of a predetermined type (e. g. a linear or higher order interpolation), or the control points may be other characteristic points, such as the centre of a spherical part of the surface.

During a display operation processor 10 selects a slice 22 dependent on the user selected viewpoint, and maps (x,y,s) locations in the slice to (x',y') locations in the filtered image. (In more advanced embodiments the slice may have variable scale values "s", e. g. to effect local blurring). Processor 10 fills-in pixel data for the (x',y') locations at least dependent on whether these (x',y') locations are inside or outside the regions whose boundaries described by the surfaces in (x,y,s) space.

Typically all (x', y') within the same region are filled in with similar image information. The digital image representation may contain additional data that indicates how to fill in the display image. The additional data may represent a maximum intensity or color value for example, as well as second order derivatives of the intensity or color values as a function on a position in (r, w) space. In this case processor 10 computes the pixel data according to the additional data.

The shape and position of surfaces 20 may be represented by sets of coefficients $C_i$ in image memory 12 in various ways.

In an embodiment each set of coefficients $C_i$ contains subsets that describe skeletons of surfaces 20 (S). A skeleton of a surface S in an n-dimensional space is a lower dimensional (e.g. n-1 dimensional) structure that forms "the bones" of the surface S, from which the surface can be obtained by adding "flesh". In one example a skeleton may defined by a set of spheres. Around any point within a surface S a largest n-1 dimensional sphere (collection of points at the same distance to the point) can be drawn has the point as centre and touches the surface S but does not intersect it (i.e. contains no points outside the surface). For most points inside the surface S such a sphere touches the surface S at only one point. However, for some special points, which form the skeleton, the sphere touches the surface S at more than one point. The surface S may be reconstructed if the skeleton and the radius of the spheres at the different positions on the skeleton are known.

In case of a three dimensional (x,y,s) space, the skeleton contains 2 dimensional planes (which may be curved) and branch lines where the planes bifurcate or terminate. The branch lines in turn run between branch points where the lines bifurcate or terminate. The spheres of the points on the branch lines touch the surface S at three locations. The spheres of the branch points touch the surface S at four locations. More generally, a skeleton contains points of various orders. The sphere of a point of order m touches the surface at m locations. The higher the order m, the lower the dimension n-m+1 of the set of points with that order.

In an embodiment points of the order n+1 (i.e. isolated points) are used as control points of an approximation of the surface S. Sets of points of increasingly lower order are obtained by interpolation between the higher order points, e.g. by directly interpolating the skeleton between these points or by interpolating lines between these points and interpolating (curved) planes between the lines etc. As a further approximation the skeleton may be approximated by a one dimensional structure, i.e. an approximation may be used wherein the width of the planes of the skeleton in (x, y, s) space is so small that the planes may be approximated by lines. This corresponds to surfaces that are approximated to be circularly symmetric around isolated lines through (x,y,s) space. Figure 3 illustrates an embodiment wherein each set of coefficients $C_i$ contains subsets that describe skeletons of surfaces 20 in terms of control point at the branch points of skeleton lines. For example, the coefficients may include (x,y,s) coordinates of branch points 30 of the skeleton. The figure schematically shows the branch points 30 and skeleton lines 32 in an xs plane, but it should be understood that for a three dimensional surface in (x,y,s) space different branch points 32 may have different y coordinate values and that the skeleton lines do not generally all lie in the same plane.

In addition to coordinates of the branch points the image representation coefficients may include parameters that specify pairs of branch points that are connected by a line from the skeleton and for each line the distance from the skeleton to the nearest points on the surface as a function of position on each line of the skeleton, e.g. as the coefficients of a polynomial as a variable that runs from 0 to 1 along line from one branch point to another. From this information the surface can be reconstructed in known ways.

To increase the accuracy of the represented skeletons, additional control points may be specified between branch points so as to specify a curved skeleton line, or a segmented skeleton line. Also, an approximation of skeleton planes may given, in the form of planes through these lines, with a certain width around the lines, by specifying the direction of the planes and the width. Thus elliptically shaped regions are better approximated. Also, of course a more complete specification of the planes may be used. In an embodiment, the surfaces describe the edges of regions of consistent curvature, i.e. where the matrix A

$$\partial^2 I(r,s)/\partial x^2 \qquad \partial^2 I(r,s)/\partial x\,\partial y$$

$$\partial^2 I(r,s)/\partial x\,\partial y \qquad \partial^2 I(r,s)/\partial y^2$$

Has either both positive or both negative eigenvalues for a given filter scale, as a function of filter scale. In this embodiment the matrix A may be encoded in the image representation for each surface, either as an average matrix A, or as a function of position along the skeleton line. The image information I(r,s) for a certain scale s may be reconstructed within a region bounded by the surface by approximation of I as a function I' of r

$$I'=I(r_0)+(r-r_0)^T A(r-r_0)$$

Here $r_0$ is the position where the approximated skeleton line intersects the plane with the required scale s and the product with the matrix A is a matrix product. For pixel locations between the encoded regions with consistent curvature the image information may be computed according to the same function as for the nearest region near that point. Other approximate functions may be used for these pixel locations outside the regions with consistent curvature, so as to interpolate the mage information between the edges of these regions without introducing local minima or maxima. Known relaxation algorithms may be used for this purpose.

In an embodiment of decoding other surfaces may be defined by making a Voronoi tessellation of (r, s) space, by constructing boundaries that lie equidistantly from specified sets of points in (r,s). The relevant specified sets of points may be specified directly by (r, s) control points in the coefficients of the digital image representation or as further surfaces, that may be specified in any way, e.g. by means of skeletons as described in the preceding.

Summarizing, in an embodiment an image function $I(r,s)$ may be reconstructed by:

- reconstructing a surface from control points, e.g. using radii from a skeleton specified by the control points effectively reconstructing a union of balls centred at locations on the skeleton, having the specified radii
- reconstruct an approximate image in regions inside the balls using a second order polynomial approximation with coefficients specified in the representation
- interpolate the image information between different regions

In another embodiment control points $p_i=(x,y,s)$ are used to describe positions q on the surface e.g. in terms of

$$q=\Sigma_i \, p_i \, W_i(u)$$

Herein "u" is a surface coordinate (two-dimensional to represent a surface in (x,y,w) space and W is a weighting function similar for example to the weighting function used to define Bezier shapes.

In yet another embodiment any predetermined function $F(r,w,C)$ may be defined and the surfaces may be specified by $F(r,w,C)=0$ using known skeleton implicit surface techniques. In this way the coefficients also define the surface. Any function may be used: for example the following function F may be used (using a vector of coefficients $C=(r(1),w(1),r(2,w(2),...))$ :

In another embodiment

$$F(r,w,C) = \Sigma_i \, (exp(-|r-r(i)|-|w-w(i)|) - F^0_i,$$

It will be understood that many other ways can be used to represent surfaces.

An image encoding apparatus for generating an image representation typically contains a computation unit coupled to an image memory and a coefficient memory.. In operation the image memory receives image data, for example in terms of pixel values (intensity and/or color values) for a high resolution grid of pixel locations in an image. The computation unit computes the coefficients of the digital image representation, and in particular the control points from the pixel values and stores the resulting coefficient in the coefficient memory for later use during decoding. A camera may be provided to acquires image data for the image memory. In a second class of digital representation each image is represented by sets control parameters that describe surfaces in a space spanned by intensity and or color values I, image positions "x,y" and filter scale "s", so that if a point (I,x,y,s) lies on a specified surface, then the intensity or color of the image is I at the location "r" for scale space bandwidth "w". This type of surface can also be specified by means of control points, skeletons, equations $F(I,r,w,C)=0$ etc.

It will be appreciated that during decoding processor 10 is able to compute the effect of arbitrary transformations from a continuous group of transformation by means of a transformation of the set of coefficients C, without having explicit access to pixel values of the untransformed image. More formally, if the image intensity and/or color of an image depends on image location "r" according to a function $I(r)$, then a transformed image is defined by

$$I(T(r))$$

Herein $T(r)$ is a mapping of image location r, involving for example a rotation $R(r)$, a translation $r+dr$ and a scaling $f*r$. When the image is digitally represented by coefficients C that specify surfaces in (x,y,s) or (I, x,y,s) space, this type of transformation may be realized by inversely transforming the coefficients, so that the specified surfaces are transformed. For example, if the coefficients include coordinates $(x_i, y_i, s_i)$ of skeleton vertices or other control points, the transformations can be realized by applying the inverse transformation $T^{-1}$ to the $r_i=(x_i, y_i)$ components of the control points, obtaining $T^{-1}(r_i)$. This does not involve any loss of accuracy, except for small rounding errors in the numbers that represent $r_i$. Successive transformations may be applied by successively transforming the coefficients.

This type of transformation may also affect the scale component of the control points. Generally, if image information values are needed on a grid of sampling locations r, then a filter scale "s" set according to the distance between the locations r on the grid should be used. The required scale can be selected by selecting a scale $s_0$ for the original locations and transforming that scale to a transformed scale s' if the transformation involves scaling with a factor f: $s'=f*s_0$ (thus, the filter scale need not be determined from the pixel distances a posteriori). In fact it may even be convenient to specify different filter scale values $s_0$ for different pixel locations, or even a position dependent filter scale $s(r)$ for example to realize position dependent blurring. In this case all filter scale values, of the filter scale function $s(r)$ should be factored when a transformation is applied.

The use of an r, s dependent image representation makes it possible to select pixel values with the appropriate filter scale without application of filtering, by computing the value of a represented image function $I(r,s)$ for the appropriate position r and scale s, instead of performing filter operations on some represented function $I(r)$ that depends on position only.

When the image function $I(r,s)$ is represented by control points in (r,s) space, any required transformation of the filter scale can also be realized by inversely transforming the filter scale component s of the control points taking $s'=s/f$ if the transformation involves a scale factor. In this way a transformed representation is obtained that can be used to obtained the transformed image by computing $I(r,s)$ values with the transformed control points for any original (untransformed) sampling grid and any filter scale or filter scale function.
Figure 4 shows an apparatus for generating digital image representations. The apparatus contains a processor 40, and a camera 42 coupled to an image memory device 44 that is coupled to processor 40. A coefficient memory 46 is coupled to processor 40 as well. In operation, camera 42 acquires image data, for example in the form of pixel values $I(r_i)$ for respective pixel locations on a sampling grid of pixel locations $r_i$. Processor 40 processes the image to determine a set of coefficients C that represents the image. Various embodiments of processing are possible.

The process of determining coefficients contains first step in which processor 40 receives the pixel values $I(r_i)$ from camera 42. These pixel values define the filtered images $I_s(r)$ according to

$$I_s(r)= \Sigma\ G_s(r,r_i)\ I(r_i)$$

The sum is over the pixel locations $r_i$. Herein $G_s(r,r_i)$ is an interpolation function, which is by

$$G_s(r,r_i)=\int dr'\ H_s(r,r')\ F(r',r_i)$$

Herein $F(r,r_i)$ defines an interpolated image of the camera. The function $F(r,r_i)$ may be selected for example according to Nyquists' theorems. Typically it depends only on the distance $r-r_i$ of between the location r to which the image is interpolated and the locations $r_i$ from which the image is interpolated. For sufficiently large s (larger than the distance between sample locations ri the exact nature of this interpolation function is

immaterial, so that $G_s(r,r_i)=H_s(r,r_i)$ in this case).

The filter kernel also typically depends on the distance between r and r', a Gaussian filter function may be used or example

$$H_s(r,r') = \exp(-(r-r')^2/2s^2)/2\pi s^2$$

It should be emphasized that, although these functions define the filtered images, it is not meant that these functions are actually computed for all r, s values. The definition merely serves to define the function that will be approximated.

In a second step, processor 40 selects control points and their positions. This may be done in various ways, dependent on the desired form of representation of the surfaces S. For example, suppose the representation uses surfaces that represent boundaries of image regions where the signs of curvature of $I_s(r)$ have the same sign, i.e. where the following matrix has either both positive or both negative eigenvalues:

$$\partial^2 I_s(r)/\partial x^2 \qquad \partial^2 I_s(r)/\partial x\partial y$$

$$\partial^2 I_s(r)/\partial x\partial y \qquad \partial^2 I_s(r)/\partial y^2$$

(Note that the differentiations may be applied to the function $G_s(r)$ so that each of these matrix elements can be expressed as a weighted sum of $I(r_i)$ values, the weights depending on the position in the image $r=(x,y)$ and the filter bandwidth). In this case the boundaries between the surfaces satisfy the equation

$$\partial^2 I_s(r)/\partial x^2 * \partial^2 I_s(r)/\partial y^2 = [\ \partial^2 I_s(r)/\partial x\partial y\ ]^2$$

That is, where the determinant D of the preceding matrix equals zero. This equation defines an equation for r and s on the boundary surface S:

$$P(r,s)=0$$

Where P follows from the equation above. Again one may note that this is an equation with products of weighted sums of $I(r_i)$ values. The combinations of r and s values for which of this equation is satisfied defines surfaces S. Specific points on these surfaces satisfy equations that can be derived from this equation. For example positions where the filter scale value s on the surface is locally extreme (maximum or minimum) satisfy the equation:

$$\partial P/\partial x=0 \text{ and } \partial P/\partial y=0$$

Once more it should be emphasized that these equations can be expressed in terms of derivatives of the known function $H_s(r)$ and the pixel values $I(r_i)$. Hence, (r,s) values that satisfy this equation can be determined without explicit calculation of filtered image values $I_s(r)$, or indeed without even computing coordinates of other points the surface S. It should be understood that any suitable kind of equation can be used to solve for control points Various characteristic points of surfaces can be searched for dependent on the equation that is selected for the purpose.

In a first embodiment processor 40 computes the control points by searching for solutions of this type of equation. Any numerical equation solving method may be used, such as an iterative methods that is known for solving equations in general. Note that only "local" computations are needed for this purpose. It is not necessary to compute complete filtered images $I_s(r)$.

In a second embodiment, processor 40 computes an approximated skeleton from the positions of the extremes (maxima or minima) of the value of the determinant D of the above matrix as a function of position "r" in regions where determinant is positive. In each of these regions there is exactly one such position "r". At a given filter scale value s, approximate skeleton locations x,y are said to lie where

$$\partial D/\partial x = 0 \text{ and } \partial D/\partial y = 0$$

If D is positive in the surrounding of this point. Processor 40 determines coordinates (x,y) of a location that satisfies this equation for an s-value and subsequently traces how this location changes as a function of s. Numerical determination of coordinates (x,y) can be performed for example by any numerical equation solving technique. When tracing the location as a function of s, the coordinates of a solution found for one s value can be used as starting point for an iteration to find the solution for a next as value. In this way the lines of the approximate skeleton can be traced. Preferably, processor 40 searches for the coordinates of branch points, where different approximate skeleton lines that have been found in this way meet. In this case the branch points may be used as control points to represent the surface. In one embodiment, straight lines between these branch points are used as an approximation to the skeleton, but more complex approximations may be used. For example parabolic skeleton lines defined by

$$r = r_a + (r_b - r_a)(s - s_a)^2/(s_b - s_a)^2$$

From one branch point $r_a$, at filter scale $s_a$ to another $r_b$, at filter scale $s_b$ if the line branches at point $r_b$ and emerges by bifurcation of another skeleton line at $r_a$. But more accurate approximations may be generated by using further coefficients to describe the shape of the approximate skeleton lines.

In an embodiment the branch points $q_0$ are located by solving directly for locations where the solutions q(s) of positions that satisfy

$$\partial D/\partial x = 0 \text{ and } \partial D/\partial y = 0$$

also satisfy

$$\partial q/\partial s = 0$$

It will be appreciated that these techniques are merely examples of techniques with which control points can be selected that may be used to describe the position and shape of surfaces S that determine an image function I(r,s).

Once processor 40 has found a control points in this way, it may execute a third step to determine additional image representation coefficients, such as derivatives of the surface at the control point, or a radius of a surface S around the control point or the radius of a region (the cross section of S with a plane with constant s value), or parameters that describe the radius of the region as a function of position along the skeleton lines, for each skeleton line etc. These can also be computed from the pixel values $I(r_i)$ directly without computing filtered images $I_s(r)$. Upon decoding these coefficients may be used to reconstruct an approximation of the surface near the control point.

Subsequently, in a fourth step processor 40 may determine further properties, such as for example the average curvature values for regions defined by the selected control points, or second order derivatives of the image information at points on the skeleton etc. Upon decoding these coefficients may be used to reconstruct an approximation image content inside the surfaces.

In a fifth step processor 40 combines the coefficients and control points that have been found in this way and stores them in memory as an image representation that may be used later to display or process images.

Summarizing, in an embodiment an image may be encoded by:

- finding the value of the determinant of the matrix of second order derivatives
- identifying image regions where the determinant is positive
- finding a core location in each regions, e.g. where the image information is extreme
- connecting the core locations to form a skeleton
- finding branch points or terminals of the skeleton
- including specifications of the branch points and terminals and their connecting skeleton lines in the image representation

- including a radius information, specifying the size of the regions around the skeleton lines.

In another embodiment processor 40 searches for control points by actually computing image values of the filtered images, segmenting these images and searching for control points that, together, represent the segment boundary with sufficiently accurately for a range of filter scale values s and positions r.

Although so far the description has been limited to time independent images, it should be understood that the invention can be applied to time dependent images (video sequences) as well. The basic mathematical aspects are very similar. An incoming video sequence typically represents samples with image information for locations with discrete x,y, t values. These serve to define an image function $I(x,y,t,s,\tau)$ as a function of x,y,t,s and $\tau$, wherein $\tau$ is a temporal filter scale. This function notionally defines image information values that can be obtained by interpolating the sample values and spatially and temporally filtering the interpolation. Evaluation of approximations of this function $I(x,y,t,s,\tau)$ for selected x,y,t,s and $\tau$ values may used to obtain pixel values for locations (x,y,t) for spatially scaled video display at selected replay speeds, without having to perform filter operations.

This function $I(x,y,t,s,\tau)$ can be approximately described by "surfaces" in an n=5 dimensional space $\Omega$ which has x,y,t,s and $\tau$ as coordinates. These surfaces are typically n-1=4 dimensional, but an approximation of these surfaces can be represented by a set of isolated control points in the space $\Omega$. In this case, the search for control points that are to be used in the representation preferably is not limited to predetermined t and $\tau$ values, but instead $(x,y,t,s,\tau)$ points are searched for that may be used for determining the image representation efficiently for any $(x,y,t,s,\tau)$.

The searching techniques that have been described for (x,y,s) space can readily be applied to $(x,y,t,s,\tau)$ space. For examples, maxima of the curvature determinant D as a function of (x,y) in various regions may be determined, these maxima may be traced as a function of $t,s,\tau$, to locate coordinates $x,y,t,s,\tau$ of branch points where different regions with positive determinant meet, or where such x,y regions come into existence upon a small change in $t,s,\tau$ values. Next, the locations of these branch points may be traced along a collection of such branch points to higher order branch points, where different collections meet, or where such collections come into existence upon a small change in $t,s,\tau$ values. This may be repeated until isolated branch points are obtained, which are used to encode a surface description.

Of course, if no temporal filtering will be needed the temporal filter scale dimension may be omitted. In this case searching for control points preferably involves searching for suitable t,s-values. If no spatial sub-sampling is needed a search for suitable $t,\tau$ values may suffice, with predetermined s value.

In general the image representation the shape and position of the surfaces S may be represented by information that specifies coordinates of a discrete set of points and curves and possibly higher-dimensional varieties, up to dimension n-1, n being the dimension of the space $\Omega$. For example, in the case where we want to represent a single still image, r=(x,y), as a function of spatial filter scale n=3. In that case we represent a luminance image $S: R^3 \to R$ in terms of a finite set discrete points $P0=\{(x,y,s)_i\}$. Further, the representation consists of a set of 1-D curves P1, where every curve in P1 is fully determined by points in P0. Further, the representation consists of a set of 2-D surfaces P2, where every surface from P2 is fully determined by few curves from P1 and/or few points from P0. For instance, a surface could be specified as a Coons patch or Gregory patch for which the boundary curves are taken from P1; below, we give other embodiments. In the case n=4 (image sequences, where elements from $\Omega$ are tuples (x,y, t,s) the representation will also consist of a set of hyper surfaces P3, where every hyper surface in P3 is fully determined by few surfaces in P2 and/or few curves in P1 and/or few points in P0, and so on. The way in which discrete sets with varieties of increasing dimensions 0, 1, 2, ...n-1 together form the description of an n-dimensional geometrical complex of arbitrary topological genus is part of the prior art; these are the so-called cellular structures or CW-complexes from algebraic topology. The position of the points in P0, including their filter bandwidth coordinate component is selected dependent on the content of the source image, so as to optimize a quality of approximation of the surfaces S.

Although the invention has been described by means of examples of specific embodiments, it will be understood that, without deviating from the invention, other embodiments are possible. Although representation by means of explicit control point coordinates has been discussed, it will be understood that the actual coefficients of the image representation may represent the control point in various ways. For example, some control points may be represented as offsets to other control points or to reference points. Other more complicated representations may be used. For example suppose the surface, or lines of the skeleton are described by a function

$$f(u) = \Sigma_i \, p_i \, W_i(u)$$

wherein Wi(u) is defined as a polynomial in "u" with predetermined coefficients, so that different points on the surface or skeleton line are obtained by substituting values for u. In this case f(u) is also a polynomial in "u" with coefficients that depend on the position of control points $p_i$. Instead of instead of coordinates of the control points $p_i$ these coefficients may used to represent the surface.

Furthermore, specific examples of surface representations have been given, for example in terms of representation of skeletons or approximated skeletons of locations of maximum curvature (maximum determinant of the matrix of second derivatives of the filtered image information), combined with a representation of radii of the surface around the skeleton. However, the invention is not limited to this type of representation.

**Claims**

1. A digital image coding apparatus, for generating a representation of spatially filtered images that are obtainable from a common source image by application of spatial filter operations with respective filter bandwidths, wherein a dependence of image information in the filtered images on position in the filtered image and filter bandwidth is represented by information that defines a surface in a space that has at least the position in the filtered image and the filter bandwidth as coordinates, the shape and position of the surface at least partly defining said dependence, the apparatus comprising:

   - an input for receiving an image signal that represents the source image as a function of position in the image;
   - a computation unit arranged to select coordinate values of a set of control points, including selection of filter bandwidth components of the coordinate values, dependent on the image signal, so that the selection optimizes a quality of approximation by an approximate version of the surface of a true version of the surface that follows from the source image.

2. A digital image coding apparatus according to Claim 1, wherein at least one of the control points is selected so that its coordinates satisfies a predetermined equation or set of equations with parameters that depend on the source image through its effect on the filtered images, the coordinates being determined by solving the equation or set of equations, by iterative evaluation of the equations or set of equations for a series of points in said space that converges to at least one of the control points.

3. A digital image coding apparatus according to Claim 2, wherein the surface expresses a shape and location of a boundary between regions in the filtered images as a function of filter bandwidth of the filtered images, wherein respective ones of the regions are selected on the basis of a positive sign of a determinant of a curvature matrix in these regions.

4. A digital image coding apparatus according to Claim 3, wherein the control points are located by computing locations of points where the image information assumes extreme values in the regions.

5. A digital image coding apparatus according to Claim 4, wherein the control points are located by computing values of filter bandwidths of meeting points of respective lines of points for respective regions and/or originating points of such lines, each line forming a collection of particular image locations for respective filter bandwidth values for a respective region, at which particular image location the image information assumes an extreme value as a function of image location when filtered with that respective bandwidth.

6. A digital image coding apparatus according to Claim 1, wherein the surface expresses a shape and location of a boundary between regions in the filtered images as a function of filter bandwidth of the filtered images, wherein respective ones of the regions are selected on the basis of values of an image property inside the region, the value of the image property changing between adjacent regions.

7. A digital image coding apparatus according to Claim 6, wherein the image property is a sign of a curvature of the image information as a function of image position.

8. A digital image coding apparatus according to Claim 7, wherein the generated representation of filtered images includes information representing a second order derivative of the image information in the regions as a function of position, the information representing a second order derivative being provided per surface in common for a plurality of filter bandwidth values.

9. A digital image coding apparatus according to Claim 6, wherein at least part of the control points are selected to coincide substantially with branch points of a skeleton of the true version of the surface.

10. A digital image coding apparatus according to Claim 7, wherein the generated representation of filtered images includes information representing a second order derivative of the image information in the regions as a function of position, the information representing a second order derivative being provided per branch in the skeleton between pairs of branch points, common for filter bandwidth values along the branch.

11. A digital image coding apparatus according to Claim 1, wherein selection of the control point comprises selecting topologically characteristic points of the true version of the surface as control points.

**12.** A digital image coding apparatus according to Claim 1, wherein selection of the control points comprises selecting to add a proposed control point for a region of the source image, followed by searching for a position to place the proposed control point in said space, including searching for the filter scale component of the coordinates of the proposed control point.

**13.** A digital image coding apparatus according to Claim 1, wherein a geometric shape that determines the approximate version of the surface is represented substantially by interpolation between control points, selection of at least one control point comprising searching for a position of the at least one control point, so that the position substantially maximizes maximum distances at which additional control points can be located, so that the interpolation from said at least one control point on mutually opposite sides of the at least one control point in said space to the additional control points approximates the geometric shape for the true surface with a required accuracy by interpolation on both mutually opposite sides.

**14.** A digital image coding apparatus according to Claim 1, wherein said space in addition has an image information value as coordinate, the image position, filter bandwidth and image information coordinates of a point on the surface representing that a pixel location in a filtered image with the filter bandwidth coordinate of the point, with the image position coordinates of the point, has the image information coordinate of the point as image information value.

**15.** A digital image coding apparatus according to Claim 1, wherein the control points are selected substantially at points of maximum curvature of the true version of the surface.

**16.** A digital image coding apparatus according to Claim 1, wherein the control points are selected substantially to minimize a number of control points that is needed to reduce an approximation error, between the approximate version of the surface the true version of the surface, to at most a predetermined error.

**17.** A digital image coding apparatus according to Claim 1, wherein the coordinates of the control points are selected substantially to minimize an approximation error between the approximate version of the surface and the true version of the surface, when at most a predetermined number of control points is used to define the approximation surface.

**18.** A digital image coding apparatus according to Claim 1, wherein the digital image representation represents a time-series of images as a function of time, wherein the coordinates of said space include a time coordinate, time components of the coordinates of the control points being selected dependent on the image signal, so that the selection optimizes a quality of approximation by an approximate version of the surface of a true version of the surface that follows from the source image.

**19.** A digital image coding apparatus according to Claim 18, wherein the digital image representation represents temporally filtered images as a function of time and temporal filter bandwidth, wherein the coordinates of said space include a temporal filter bandwidth coordinate, temporal filter bandwidth components of the coordinates of the control points being selected dependent on the image signal, so that the selection optimizes a quality of approximation by an approximate version of the surface of a true version of the surface that follows from the source image.

**20.** A digital image generating apparatus for generating a display image from a digital image representation that represents spatially filtered images that are obtainable from a common source image by application of spatial filter operations with respective filter bandwidths, wherein a dependence of image information in the filtered images on position in the filtered image and filter bandwidth is represented by information that defines a surface in a space that has at least the position in the filtered image and the filter bandwidth as coordinates, the shape and position of the surface at least partly defining said dependence, the apparatus comprising:

- an input for receiving a selected filter bandwidth value and a specification of a matrix of locations in said space with said filter bandwidth value as filter bandwidth coordinate value, each location in said matrix being defined for a respective pixel location in the display image;
- an image value computation circuit arranged to compute pixel values of the display image using the relative position of the locations in the matrix with respect to the control points, relative differences between the selected filter bandwidth value and filter bandwidth coordinates of the control points being computed individually for each control point that is used.

**21.** A digital image generating apparatus according to Claim 19, the apparatus comprising :

- an input for receiving a specification of a transformation from a group that includes that includes rotations, scalings and/or translations and/or combinations thereof;
- the image value computation unit being arranged to apply a transformation of the control points relative to coordinates of the locations of the matrix, prior to computation of the pixel values using the relative position of the locations of the matrix with respect to the control points.

22. A digital image generating apparatus according to Claim 19, wherein the digital image representation represents a time-series of images as a function of time, wherein the coordinates of said space include a time coordinate, the control points having independently selectable time coordinate values:

- the input being received to receive a selected time value;
- the image value computation circuit being arranged to compute pixel values of the display image using the relative position of the locations in the matrix with respect to the control points, relative differences between the selected time value and time coordinate components of the control points being computed individually for each control point that is used.

23. A digital image coding apparatus according to Claim 22, wherein the digital image representation represents temporally filtered images as a function of time and temporal filter bandwidth, wherein the coordinates of said space include a temporal filter bandwidth coordinate, the control points having independently selectable temporal filter bandwidth coordinate values:

- the input being arranged to receive a selected temporal filter bandwidth value;
- the image value computation circuit being arranged to compute pixel values of the display image using the relative position of the locations in the matrix with respect to the control points, relative differences between the temporal filter bandwidth value and temporal filter bandwidth coordinate components of the control points being computed individually for each control point that is used..

24. A digital image coding method, for representing spatially filtered images that are obtainable from a common source image by application of spatial filter operations with respective filter bandwidths, wherein a dependence of image information in the filtered images on position in the filtered image and filter bandwidth is represented by information that defines a surface in a space that has at least the position in the filtered image and the filter bandwidth as coordinates, the shape and position of the surface at least partly defining said dependence, the method comprising:

- approximating a true version of the surface, which follows from the source image, by an approximate version of the surface, whose position and shape is described by locations of a set of control points in said space;
- selecting coordinate values of the control points, including filter bandwidth components of the coordinate values, dependent on the content of the common source image, so as to optimize a quality of approximation of the true version of the surface by the approximate version of the surface.

25. A digital image coding method according to Claim 1, wherein the digital image representation represents a time-series of images as a function of time, wherein the coordinates of said space include a time coordinate, time components of the coordinates of the control points being selected dependent on the image signal, so that the selection optimizes a quality of approximation by an approximate version of the surface of a true version of the surface that follows from the source image.

26. A computer readable medium comprising a program of machine instructions to make a programmable computer perform the method of Claim 23.

27. A method of generating a display image from a digital image representation that represents spatially filtered images that are obtainable from a common source image by application of spatial filter operations with respective filter bandwidths, wherein a dependence of image information in the filtered images on position in the filtered image and filter bandwidth is represented by information that defines a surface in a space that has at least the position in the filtered image and the filter bandwidth as coordinates, the shape and position of the surface at least partly defining said dependence, the method comprising:

- defining a selected filter bandwidth value and a matrix of locations in said space with said filter bandwidth value as filter bandwidth coordinate value, each location in said matrix being defined for a respective pixel location in the display image;
- computing pixel values of the display image using the relative position of the locations in the matrix with respect to the control points, relative differences between the selected filter bandwidth value and filter bandwidth coordinates of the control points being computed individually for each control point that is used.

**28.** A method of generating a display image according to Claim 26, the method comprising:

- specifying a transformation from a group that includes that includes rotations, scalings and/or translations and/or combinations thereof;
- applying a transformation of the control points relative to coordinates of the locations of the matrix, prior to computation of the pixel values using the relative position of the locations of the matrix with respect to the control points.

**29.** A method of generating a display image according to Claim 26, wherein the digital image representation represents a time-series of images as a function of time, wherein the coordinates of said space include a time coordinate, the control points having independently selectable time coordinate values:

- the image value computation circuit being arranged to compute pixel values of display images for a series of frame time values using the relative position of the locations in the matrix with respect to the control points, relative differences between a series of frame time values and time coordinate components of the control points being computed individually for each control point that is used.

**30.** A computer readable medium comprising a program of machine instructions to make a programmable computer perform the method of Claim 26.

**31.** A computer readable medium comprising a representation of a digital image that represents spatially filtered images that are obtainable from a common source image by application of spatial filter operations with respective filter bandwidths, wherein a dependence of image information in the filtered images on position in the filtered image and filter bandwidth is represented by information that defines a surface in a space that has at least the position in the filtered image and the filter bandwidth as coordinates, the shape and position of the surface at least partly defining said dependence, wherein the medium stores coordinate information of the control points that define an approximate version of said surface, the coordinate information being represented in way that allows the filter bandwidth coordinate component of each control point to be set independently of all the filter bandwidth coordinate component of all other control points.

12  10  14

16

FIG. 1

20  20  20  20  20

20

20  20  20

S  20  20

X  20  22

FIG. 2a

Y

X

20  20

20

24

20

20

20

FIG. 2b

FIG. 2c

FIG. 3

FIG. 4

**European Patent Office**

## EUROPEAN SEARCH REPORT

Application Number

EP 04 10 0447

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BURT P J ET AL: "THE LAPLACIAN PYRAMID AS A COMPACT IMAGE CODE" IEEE TRANSACTIONS ON COMMUNICATIONS, IEEE INC. NEW YORK, US, vol. COM 31, no. 4, 1 April 1983 (1983-04-01), pages 532-540, XP000570701 ISSN: 0090-6778 | 1,20,24, 27,31 | G06T9/00 |
| A | * the whole document * | 2-19, 21-23, 25,26, 28-30 | |
| | --- | | |
| A | GOEKMEN M ET AL: "LAMBDATAU-SPACE REPRESENTATION OF IMAGES AND GENERALIZED EDGE DETECTOR" PROCEEDINGS OF THE 1996 IEEE COMPUTER SOCIETY CONFERENCE ON COMPUTER VISION AND PATTERN RECOGNITION. SAN FRANCISCO, JUNE 18 - 20, 1996, PROCEEDINGS OF THE IEEE COMPUTER SOCIETY CONFERENCE ON COMPUTER VISION AND PATTERN RECOGNITION, LOS ALAMITOS, IEEE, 18 June 1996 (1996-06-18), pages 764-769, XP000640287 ISBN: 0-8186-7258-7 ----- | | |
| | | | **TECHNICAL FIELDS SEARCHED (Int.Cl.7)** |
| | | | G06T |

The present search report has been drawn up for all claims

| Place of search | Date of completion of the search | Examiner |
|---|---|---|
| MUNICH | 16 June 2004 | Pierfederici, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)